# FASCICULE DE BREVET EUROPEEN

(11) **EP 3 589 820 B1**
(45) Date de publication et mention de la délivrance du brevet: **04.08.2021**
(21) Numéro de dépôt: 18713304.6
(22) Date de dépôt: 01.03.2018
(51) Int. Cl.: F01D 5/14, F01D 5/28, F01D 9/04

(54) **AUBE DE TURBOMACHINE ET PROCÉDÉ POUR SA FABRICATION**
TURBOMASCHINENSCHAUFEL UND VERFAHREN ZU DEREN HERSTELLUNG
TURBOMACHINE BLADE AND METHOD OF MANUFACTURING THE SAME

(30) Priorité: 02.03.2017 FR 1751713
(43) Date de publication de la demande: 08.01.2020
(73) Titulaire: Safran, 75015 Paris (FR)
(72) Inventeur: LANFANT, Nicolas, Pierre, 77550 Moissy-Cramayel Cedex (FR); FAIVRE D'ARCIER, Pierre, 77550 Moissy-Cramayel Cedex (FR)
(74) Mandataire: Cabinet Beau de Loménie
(86) Numéro de dépôt international: PCT/FR2018/050474
(87) Numéro de publication internationale: WO 2018/158544

(56) Documents cités:
- WO-A1-2013/079859
- WO-A1-2014/135798
- US-A1- 2016 108 746
- US-A1- 2017 051 617
- US-B1- 6 196 794

## Description

### Arrière-plan de l'invention

La présente invention se rapporte au domaine général des aubes de turbomachines. Elle concerne plus particulièrement, mais non exclusivement, une aube directrice de sortie d'un redresseur de flux secondaire de turbomachine aéronautique présentant un corps de pale en matériau composite et un élément rapporté formant plateforme.

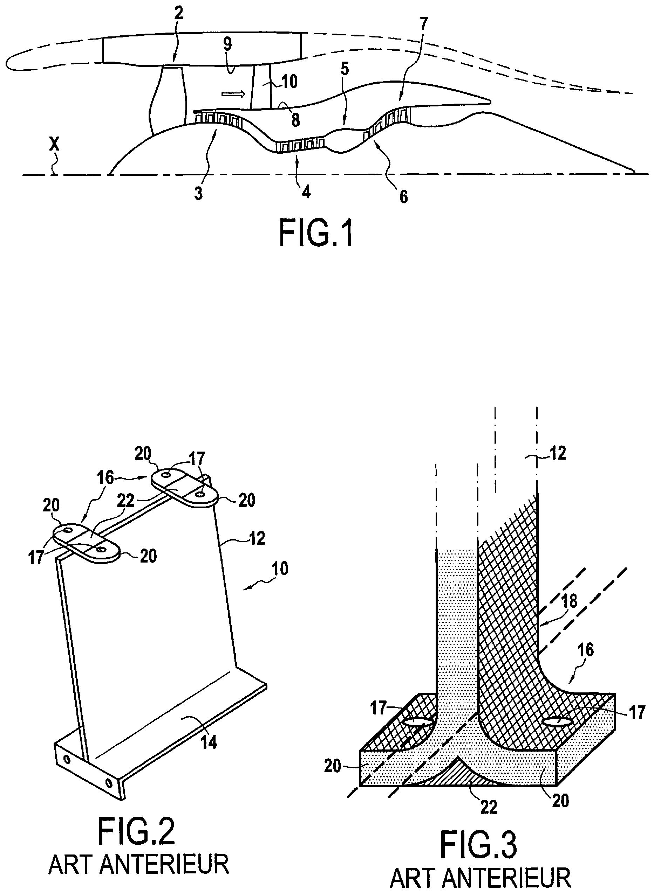

La figure 1 montre une vue schématique en coupe longitudinale d'un turboréacteur à double flux 1 centré sur l'axe X. Il comporte, d'amont en aval : une soufflante 2, un compresseur basse pression 3, un compresseur haute pression 4, une chambre de combustion 5, une turbine haute pression 6, et une turbine basse pression 7. A l'entrée du turboréacteur 1, le flux d'air entrant dans la soufflante 2 est divisé en un flux primaire ou flux chaud, et en un flux secondaire ou flux froid. Le canal d'écoulement du flux secondaire comprend classiquement un redresseur muni d'aubes directrices de sortie 10 (ou « OGV » pour « Outlet Guide Vane ») disposées en aval de la soufflante 2, qui ont notamment pour fonction de redresser le flux froid en sortie de la soufflante 2 pour en tirer le maximum de poussée. Ces aubes 10 ont également une fonction structurale et doivent notamment être capables de supporter des efforts exercés par le moteur en fonctionnement (par exemple en flexion tangentielle, aussi appelée « fan twist »), ou un choc du à l'ingestion d'un objet par la soufflante 2, ou encore le détachement d'une aube de la soufflante 2. Ainsi, ces aubes 10 doivent à la fois présenter des propriétés mécaniques satisfaisantes tout en étant suffisamment minces pour améliorer le rendement propulsif du moteur en limitant sa masse.

Il est connu de réaliser les aubes directrices de sortie 10 en matériau composite comprenant un renfort fibreux densifié par une matrice, par exemple une matrice organique, afin de disposer d'une pièce qui présente une bonne tenue mécanique tout en ayant une masse réduite. Un exemple d'aube 10 de l'art antérieur en matériau composite est représenté en perspective sur la figure 2. L'aube 10 comprend un corps de pale 12 qui s'étend radialement (par rapport à l'axe X) entre une plateforme interne 14 par laquelle l'aube 10 est fixée à un carter interne 8 du turboréacteur 1, et deux plateformes externes 16. Les plateformes externes 16 comprennent ici des perçages permettant la fixation de l'aube à un carter externe 9 du turboréacteur, et sont, de par leur position, très sollicitées en flexion tangentielle lorsque le moteur fonctionne. Le document WO 2013/079859 A1 divulgue un autre exemple d'une aube de turbomachine en matériau composite comportant une pale ayant un renfort fibreux formée par tissage tridimensionnel, une plate-forme intérieure et une plate-forme extérieure, la pale étant prolongée du côté extérieur de la plate-forme extérieure par une partie d'accrochage amont et une partie d'accrochage aval pour le montage de l'aube dans un carter, les parties d'accrochage étant formées par des pattes d'accrochage s'étendant à partir d'extrémités longitudinales extérieures de parois intrados et extrados de la pale avec continuité de texture du renfort fibreux entre lesdites parois et les pattes d'accrochage.

La figure 3 montre une vue en perspective illustrant le principe de conception de la plateforme 16 en matériau composite comprenant un renfort fibreux 18 (correspondant au renfort fibreux formant aussi le corps de pale 12) densifié par une matrice. Le renfort fibreux 18 présente, au niveau de la plateforme 16, deux segments 20 qui sont déliés l'un de l'autre et pliés de part et d'autre du corps de pale 12. Un insert 22 est présent au niveau de la jonction entre les deux segments 20 afin de renforcer la plateforme 16. Classiquement, une telle aube 10 est fabriquée à partir d'une préforme fibreuse à tissage tridimensionnel densifiée par une matrice selon un procédé de moulage par injection de résine (RTM). De telles aubes 10 présentent des avantages en termes de simplicité de fabrication et de réduction de la masse de l'aube.

Toutefois, la tenue mécanique de ces aubes directrices de sortie 10 peut être encore améliorée, notamment au niveau des plateformes 16 qui peuvent assurer la fixation de l'aube 10 au turboréacteur.

### Objet et résumé de l'invention

La présente invention a donc pour but principal de fournir une architecture d'aube de turbomachine présentant une tenue mécanique améliorée, une aube selon l'invention comprenant :
un corps de pale en matériau composite ayant un renfort fibreux présentant un tissage tridimensionnel et densifié par une matrice, le renfort fibreux ayant une direction longitudinale correspondant à la direction longitudinale de l'aube et présentant, dans cette direction longitudinale, une première partie prolongée par une deuxième partie d'extrémité, la deuxième partie comprenant deux segments déliés l'un de l'autre à partir de la jonction entre la première et la deuxième partie et jusqu'à une extrémité libre du renfort fibreux ; et
un élément rapporté présentant une section en forme de pi (π), l'élément rapporté comportant une partie de plateforme s'étendant perpendiculairement par rapport à la direction longitudinale, et deux brides longitudinales séparées l'une de l'autre par un espace, la partie de plateforme comprenant un logement délimité par une paroi de fond et un rebord, la paroi de fond comprenant une ouverture communiquant avec l'espace entre les deux brides,
la première partie du renfort fibreux du corps de pale étant enserrée entre les deux brides de l'élément rapporté, les segments de la deuxième partie du renfort fibreux étant pliés de part et d'autre de la première partie contre la paroi de fond du logement de l'élément rapporté.

A l'aide de simulations prenant en compte des efforts en flexion tangentielles, en traction et en compression imposés à l'aube en fonctionnement, il a été montré que l'architecture d'aube de turbomachine selon l'invention est un excellent compromis entre une réduction de masse par rapport à des aubes métalliques, et une tenue mécanique améliorée par rapport à des aubes composites de l'art antérieur, et notamment celle présentée en introduction. En particulier, la tenue mécanique de l'aube selon l'invention est améliorée au niveau de l'élément rapporté formant plateforme. L'aube selon l'invention présente en outre simplicité de fabrication grâce à un renfort fibreux à tissage tridimensionnel et l'utilisation d'un seul élément rapporté pour former une plateforme.

Par « tissage tridimensionnel » ou « tissage 3D », on entend ici un mode de tissage par lequel certains au moins des fils de chaîne lient des fils de trame sur plusieurs couches de trame. Bien entendu, les termes « chaîne » et « trame » sont interchangeables indifféremment dans la définition précédente.

Dans un exemple de réalisation, les segments de la deuxième partie du renfort fibreux peuvent être déliés selon un plan contenant les directions longitudinale et transversale du renfort fibreux.

Dans un exemple de réalisation, l'aube peut comprendre en outre un insert présent entre les segments de la deuxième partie du renfort fibreux au niveau de la jonction entre lesdits segments. Cet insert peut permettre de combler l'espace au niveau de la jonction entre les segments de la deuxième partie du renfort fibreux. De la sorte, le logement de l'élément rapporté peut être comblé, ce qui permet d'obtenir une surface plane au niveau de la face de l'élément rapporté opposée au corps de pale. Cette disposition permet d'améliorer encore la tenue mécanique de l'ensemble. Cet insert peut être collé à l'aide d'une colle ou d'une résine, par exemple de la résine utilisée pour fabriquer l'aube.

Dans un exemple de réalisation, l'aube peut comprendre en outre au moins un trou de fixation traversant l'élément rapporté et un segment de la deuxième partie du renfort fibreux. Le trou de fixation peut permettre le passage de moyens de fixation (vis, rivets, etc.) pour fixer l'aube à une autre pièce de la turbomachine, par exemple un carter. Ainsi, la fixation de l'aube est améliorée, puisque les moyens de fixation sont en prise avec l'élément rapporté et le renfort fibreux du corps de pale. Dans ce cas, il peut être avantageux que les dimensions des segments de la deuxième partie du renfort fibreux soient telles que les segments recouvrent toute la paroi de fond du logement. En variante, le trou de fixation peut ne pas traverser un segment de la deuxième partie du renfort fibreux.

Dans un exemple de réalisation, l'aube peut comprendre en outre un film de colle entre le renfort fibreux du corps de pale et l'élément rapporté. Cette disposition permet d'améliorer encore l'adhésion entre le renfort fibreux et l'élément rapporté en augmentant la résistance mécanique de la plateforme aux interfaces entre le renfort fibreux et l'élément rapporté, notamment aux sollicitations en flexion tangentielle. Le film de colle peut comprendre une résine, par exemple thermoplastique ou thermodurcissable.

Dans un exemple de réalisation, le renfort fibreux du corps de pale peut comprendre des fibres de carbone. En variante, le renfort fibreux du corps de pale peut comprendre des fibres de verre ou du kevlar.

Dans un exemple de réalisation, la matrice du corps de pale peut être une matrice organique ou une matrice céramique. Une matrice organique peut par exemple être obtenue à partir d'une résine thermoplastique ou thermodurcissable.

Dans un exemple de réalisation, l'élément rapporté peut être en matériau composite ayant un renfort fibreux densifié par une matrice. Ce choix de matériau pour l'élément rapporté peut être avantageux afin de réduire la dilatation différentielle entre le corps de pale, également en matériau composite, et l'élément rapporté.

En variante, l'élément rapporté peut être en un matériau métallique, par exemple en acier inoxydable, en titane, en aluminium, ou l'un de leurs alliages. Dans ce cas, il peut être avantageux que l'aube comprenne en outre un pli de fibres de verre entre le renfort fibreux du corps de pale et l'élément rapporté. Ce pli de fibres de verre permet de réduire le couplage galvanique qui pourrait exister entre le carbone qui peut être présent dans les fibres du renfort fibreux de l'aube et le métal de l'élément rapporté.

Dans un exemple de réalisation, l'élément rapporté peut être en un matériau plastique, et par exemple obtenu à partir d'une résine thermoplastique ou thermodurcissable, chargée ou non.

Dans un exemple de réalisation, l'élément rapporté peut être présent sur toute la dimension transversale du corps de pale.

Dans un exemple de réalisation, l'aube peut comprendre une pluralité d'éléments rapportés sur une même extrémité du corps de pale, notamment deux éléments rapportés.

Dans un exemple de réalisation, l'aube peut comprendre au moins un élément rapporté sur chaque extrémité longitudinale opposée du corps de pale, notamment sur son extrémité radialement intérieure (par rapport à l'axe de la turbomachine) et sur son extrémité radialement extérieure.

Dans un exemple de réalisation, l'aube peut constituer une aube directrice de sortie de turbomachine aéronautique. L'aube peut également constituer un autre type d'aube fixe d'une turbomachine, par exemple une aube de redresseur dans un compresseur ou une aube de distributeur dans une turbine. L'aube pourrait également être une aube montée sur un rotor, par exemple une aube de soufflante de turbomachine aéronautique.

L'invention vise aussi une turbomachine comprenant une aube telle que celle décrite ci-avant.

Enfin, l'invention vise encore un procédé de fabrication d'une aube de turbomachine comprenant : un corps de pale en matériau composite ayant un renfort fibreux densifié par une matrice, le corps de pale s'étendant selon une direction longitudinale correspondant à la direction longitudinale de l'aube ; et un élément rapporté présentant une section en forme de pi, l'élément rapporté comportant une partie de plateforme s'étendant perpendiculairement par rapport à la direction longitudinale, et deux brides longitudinales séparées l'une de l'autre par un espace, la partie de plateforme comprenant un logement délimité par une paroi de fond et un rebord, la paroi de fond comprenant une ouverture communiquant avec l'espace entre les deux brides, le procédé comprenant les étapes suivantes :
la formation par tissage tridimensionnel d'une préforme fibreuse destinée à former le renfort fibreux du corps de pale de l'aube, la préforme ayant une direction longitudinale correspondant à la direction longitudinale de l'aube à fabriquer et présentant, dans cette direction longitudinale, une première partie prolongée par une deuxième partie d'extrémité, la deuxième partie comprenant deux segments déliés l'un de l'autre à partir de la jonction entre la première et la deuxième partie et jusqu'à une extrémité libre de la préforme,
l'insertion de la préforme fibreuse dans l'ouverture de l'élément rapporté de façon à ce que la première partie de la préforme soit enserrée entre les brides de l'élément rapporté et que les segments de la deuxième partie dépassent de la paroi de fond du logement,
le pliage de chaque segment de la deuxième partie de la préforme fibreuse de part et d'autre de la première partie afin de les rabattre contre la paroi de fond du logement et obtenir une ébauche d'aube,
le placement de l'ébauche d'aube dans la cavité d'un moule ayant la forme de l'aube à fabriquer,
l'injection d'une résine à l'intérieur de la cavité du moule dans laquelle l'ébauche d'aube est présente de façon à imprégner l'ébauche de résine, et
le traitement thermique de l'ébauche imprégnée de façon à transformer la résine et obtenir l'aube.

Dans un exemple de réalisation, le procédé peut comprendre en outre, avant l'insertion de la préforme fibreuse dans l'ouverture de l'élément rapporté, une étape de compactage des première et deuxième parties de la préforme fibreuse. Cette étape peut être avantageuse quand, suite au tissage, la préforme fibreuse est foisonnée, et l'insertion de cette dernière entre les brides et l'ouverture de l'élément rapporté peut être difficile à réaliser.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe d'un turboréacteur à double flux,
- la figure 2 montre une vue en perspective d'une aube directrice de sortie de l'art antérieur,
- la figure 3 illustre le principe de conception de l'aube de l'art antérieur de la figure 2 au niveau d'une plateforme,
- les figures 4A et 4B sont respectivement des vues en perspective et en coupe d'une aube selon un mode de réalisation de l'invention, et
- les figures 5A à 5E illustrent différentes étapes d'un procédé de fabrication d'une aube selon un mode de réalisation de l'invention.

### Description détaillée de l'invention

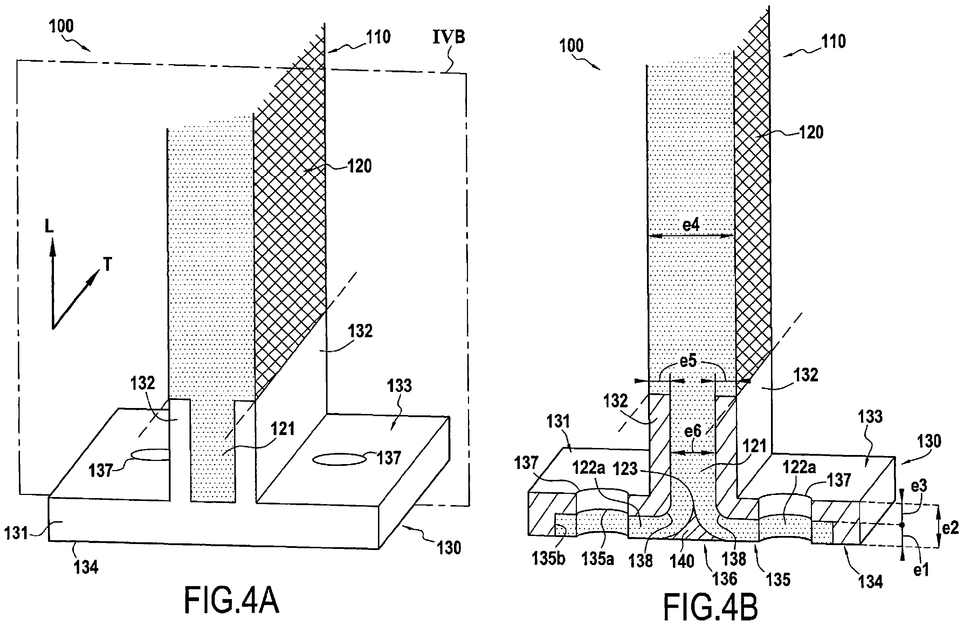

Une aube 100 selon l'invention va être décrite en lien avec les figures 4A et 4B, la figure 4B montrant une coupe de l'aube 100 de la figure 4A selon son épaisseur. On notera que les figures 4A et 4B sont des vues simplifiées qui illustrent le principe de conception de l'aube 100, et notamment au niveau d'une plateforme de cette aube. L'aube 100 peut par exemple avoir une forme générale similaire à celle de l'aube 10 présentée en introduction.

L'aube 100 comprend un corps de pale 110 en matériau composite comprenant un renfort fibreux 120 présentant un tissage tridimensionnel densifié par une matrice. Le corps de pale 110 de l'aube s'étend généralement selon une direction longitudinale L, correspondant par ailleurs à la direction longitudinale de l'aube. Le corps de pale 110 s'étend transversalement (selon la direction T) entre un bord d'attaque et un bord de fuite (non représentés). Le renfort fibreux 120 peut comprendre des fibres. Le renfort fibreux peut par exemple comprendre des fibres de carbone, des fibres céramiques, des fibres de verre, ou du kevlar. Le renfort fibreux 120 peut présenter un tissage à armure interlock, connu en soi. La matrice du corps de pale 110 peut être une matrice organique, ou une matrice céramique. La matrice peut être obtenue par exemple à partir d'une résine précurseur de matrice, thermoplastique ou thermodurcissable. Lorsque le renfort fibreux est obtenu par tissage, la direction longitudinale L peut être incluse dans le plan de tissage du renfort fibreux.

L'aube 100 comprend en outre un élément rapporté 130, jouant ici le rôle de plateforme, présentant une section en forme de π, c'est-à-dire ayant une partie de plateforme 131 (barre horizontale du π), et deux brides longitudinales 132 (barres verticales du π). Dans l'exemple illustré sur ces figures, on notera que le π est à l'envers. La partie de plateforme 131 est située à une extrémité du corps de pale 110, et s'étend perpendiculairement par rapport à celle-ci. Les brides 132 sont séparées entre elles d'un certain espace non nul, dans lequel est présent le renfort fibreux 120 du corps de pale.

La partie de plateforme 131 de l'élément rapporté 130 comprend une première face 133 située du côté du corps de pale 110, et une deuxième face 134 située du côté opposé au corps de pale 110. Les brides 132 s'étendent ainsi selon la direction longitudinale L à partir de la face 133 de la partie de plateforme 131 et en direction du corps de pale 110. La partie de plateforme 131 comprend en outre, au niveau de la face 134, un logement 135 délimité par une paroi de fond 135a et par un rebord 135b. L'élément rapporté 130 est en outre muni d'une ouverture 136 présente dans la paroi de fond 135a du logement 135 en communication avec l'espace séparant les deux brides 132. L'ouverture 136 de l'élément rapporté 130 est traversée par le renfort fibreux 120 du corps de pale 110.

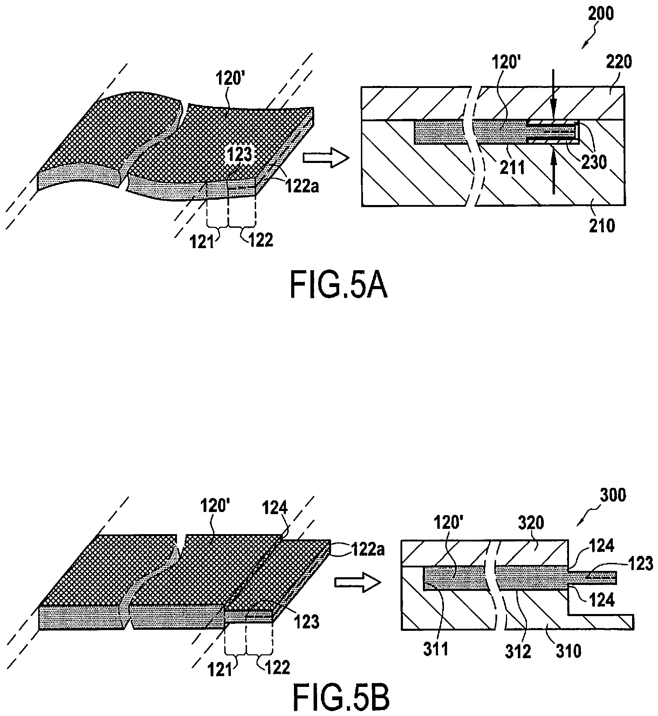

Le renfort fibreux 120 du corps de pale comprend une première partie 121 prolongée par une deuxième partie d'extrémité 122 (figures 5A à 5E). La première partie 121 est enserrée entre les brides 132 de l'élément rapporté 130. Dans l'exemple illustré, la première partie 121 et la deuxième partie 122 présentent une dimension dans la direction transversale T qui est sensiblement égale ou inférieure à la dimension de chaque bride 132 dans la direction transversale T. La deuxième partie 122 comprend deux segments 122a déliés l'un de l'autre à partir d'une jonction 123 entre la première partie 121 et la deuxième partie 122, et jusqu'à une extrémité du renfort fibreux 120. La déliaison entre les deux segments 122a s'étend ici selon un plan contenant les directions L et T. Les segments 122a sont pliés de part et d'autre de la première partie 121 à l'intérieur du logement 135. Chaque segment 122a repose ainsi contre la paroi de fond 135a du logement 135. De manière générale, les dimensions des segments 122a de la deuxième partie 122 seront adaptées par rapport à celles de l'ouverture 136. On notera que l'élément rapporté 130 peut présenter des congés 138 à l'intérieur du logement 135 et au niveau de l'ouverture 136, afin de ne pas abîmer le renfort fibreux 120 avec des arêtes trop vives.

L'élément rapporté 130 peut en outre comprendre des trous de fixation 137 (ici au nombre de deux) qui traversent l'élément rapporté de part en part selon la direction longitudinale L. Ces trous de fixation 137 peuvent permettre la fixation de l'aube 100 à l'intérieur d'une turbomachine. Dans l'exemple illustré, les trous de fixation 137 sont situés de part et d'autre des brides 132 et traversent chacun un segment 122a du renfort fibreux 120. Dans une variante non illustrée, les trous de fixation 137 ne traversent pas les segments 122a qui présentent alors une longueur réduite par rapport à ceux illustrés sur les figures.

L'élément rapporté 130 peut être en un matériau composite comprenant un renfort fibreux densifié par une matrice. Dans ce cas, le renfort fibreux de l'élément rapporté peut comprendre des fibres, par exemple en carbone ou en céramique. La matrice peut quant à elle être une matrice organique ou céramique, et par exemple obtenue à partir d'une résine thermoplastique ou thermodurcissable. En variante, l'élément rapporté 130 peut être en un matériau plastique (c'est-à-dire dépourvu de renfort fibreux), par exemple obtenu à partir d'une résine, chargée ou non. Encore en variante, l'élément rapporté 130 peut être en un matériau métallique, par exemple en acier inoxydable, en titane ou en aluminium. Dans ce cas, et pour éviter d'éventuels couplages galvaniques lorsque le corps de pale comprend du carbone, un pli de fibres de verre (non représenté) peut être présent entre le renfort fibreux 120 du corps de pale et l'élément rapporté 130. Ce pli de fibres de verre peut notamment être intégré à la surface du renfort fibreux lors du tissage de ce dernier.

L'aube 100 comprend enfin, dans l'exemple illustré, un insert 140 jouant le rôle de bouche-trou ou pièce de comblement, positionné entre les segments 122a du renfort fibreux 120 au niveau de la jonction 123. L'insert 140 présente une section de forme généralement triangulaire et permet de combler l'espace libre entre les segments 122a pliés, et, par suite, de combler l'ensemble du volume intérieur du logement 135. L'insert 140 peut être collé. L'insert 140 peut être en un matériau plastique.

Dans l'exemple illustré, l'épaisseur e1 de chaque segment 122a est sensiblement égale à la profondeur du logement 135. L'épaisseur totale e2 de la partie de plateforme 131 est quant à elle sensiblement égale à la somme de l'épaisseur e1 de chaque segment 122a et de l'épaisseur e3 de la partie de plateforme 131 au niveau du logement 135. Le renfort fibreux 120 dans le corps de pale 110 présente une épaisseur e4, chaque bride 132 présente une épaisseur e5, et la première partie 121 du renfort fibreux 120 enserrée entre les deux brides 132 présente une épaisseur e6. On notera que l'épaisseur e6 correspond ici à l'espacement entre les deux brides 132. Dans l'exemple illustré, l'épaisseur e4 est sensiblement égale à la somme des deux épaisseurs e5 des brides 132 et de l'épaisseur e6 de la première partie 121 du renfort fibreux 120, de façon à ce que la surface du corps de pale 110 soit continue entre les brides 132 et le corps de pale 110, et que la présence des brides 132 n'altère pas la surface aérodynamique de l'aube 100.

On notera que l'aube 100 a été représentée de façon simplifiée sur les figures, où la partie de plateforme 131 et le logement 135 sont de forme généralement parallélépipédique. On ne sort toutefois pas du cadre de l'invention lorsque ces éléments sont de formes géométriques différentes.

L'aube 100 peut constituer une aube directrice de sortie d'un redresseur de flux secondaire de turbomachine aéronautique, par exemple d'un turboréacteur à double flux tel que celui illustré sur la figure 1. En variante, l'aube 100 peut être utilisée dans d'autres organes de la turbomachine, par exemple dans un compresseur ou une turbine.

Un exemple de procédé de fabrication d'une aube 100 selon l'invention va maintenant être décrit en lien avec les figures 5A à 5E.

On réalise tout d'abord le tissage tridimensionnel d'une préforme 120' (figure 5A) qui constituera le renfort fibreux 120 de l'aube 100. Le terme « préforme fibreuse » est utilisé ici pour désigner le renfort fibreux 120 en cours de fabrication et jusqu'à ce qu'il présente ses forme et dimensions finales. Le tissage peut être réalisé, de façon bien connue, dans un métier à tisser de type Jacquard.

La préforme fibreuse 120' présente, après le tissage, la première partie 121 et la deuxième partie 122, ladite deuxième partie 122 comprenant les deux segments 122a déliés l'un de l'autre à partir de la jonction 123 entre les deux parties 121 et 122 et jusqu'à une extrémité libre de la préforme 120'. Le cas échéant, la préforme 120' tissée peut être taillée pour éliminer les éventuelles sorties de couche. Le document WO2013079860 divulgue un exemple d'aube de turbomachine en matériau composite comprenant un renfort fibreux tissé présentant des déliaisons.

La préforme fibreuse 120' est ensuite placée dans un outillage de compactage 200 afin de compacter les première 121 et deuxième 122 parties pour faciliter leur insertion ultérieure dans l'élément rapporté 130 (figure 5A). En effet, la préforme 120' peut être foisonnée à la suite du tissage et il peut être nécessaire de la compacter pour pouvoir continuer le procédé de fabrication. Lors de l'étape de compactage, la préforme 120' peut avoir être mouillée, par exemple avec de l'eau osmosée ou distillée. Dans ce cas, une étape de séchage pourra être nécessaire. En outre, la préforme 120' peut être chauffée localement lors du compactage. L'outillage 200 comprend un moule 210 pourvu d'une cavité 211 dans laquelle on place la préforme 120', et un contre-moule 220 qui peut venir se positionner sur le moule 210 pour le fermer. Le compactage des parties 121 et 122 de la préforme 120' est réalisé ici à l'aide de cales 230 que l'on vient interposer entre le moule 210 et la préforme 120', et entre la préforme 120' et le contre-moule 220 dans la cavité 211. Les cales 230 peuvent présenter une épaisseur égale ou légèrement supérieure à l'épaisseur e5 de chaque bride 132 de l'élément rapporté 130. Grâce à cette étape compactage, optionnelle, il est possible de diminuer localement l'épaisseur de la préforme 120' au niveau des première et deuxième portions 121 et 122 jusqu'à une valeur comprise entre 90% et 100%, par exemple 95%, de son épaisseur finale. Suite à cette étape, la préforme fibreuse 120' présente, au niveau de la jonction entre la première partie 121 et le reste de la préforme 120', des rebords 124.

Puis, pour faciliter l'insertion ultérieure de la préforme 120' dans l'élément rapporté 130, on peut placer cette dernière dans un outillage de maintien 300 (figure 5B). L'outillage de maintien 300 comprend une première partie 310 munie d'un rebord 311 contre lequel on vient appuyer l'extrémité de la préforme 120' située à l'opposé des parties 121 et 122. L'outillage 300 comprend en outre une deuxième partie 320 positionnée sur la première partie 310 formant avec la première partie 310 une cavité 311 ouverte de laquelle dépassent les première et deuxième portions 121 et 122 préalablement compactées. Les première et deuxième parties 310 et 320 de l'outil 300 sont ainsi alignées avec les rebords 124 de la préforme 120'. L'outillage de maintien 300 peut aussi être utilisé pour mettre en forme la préforme 120' au niveau de sa portion destinée à former le corps de pale 110 de l'aube 100, de façon connue en soi.

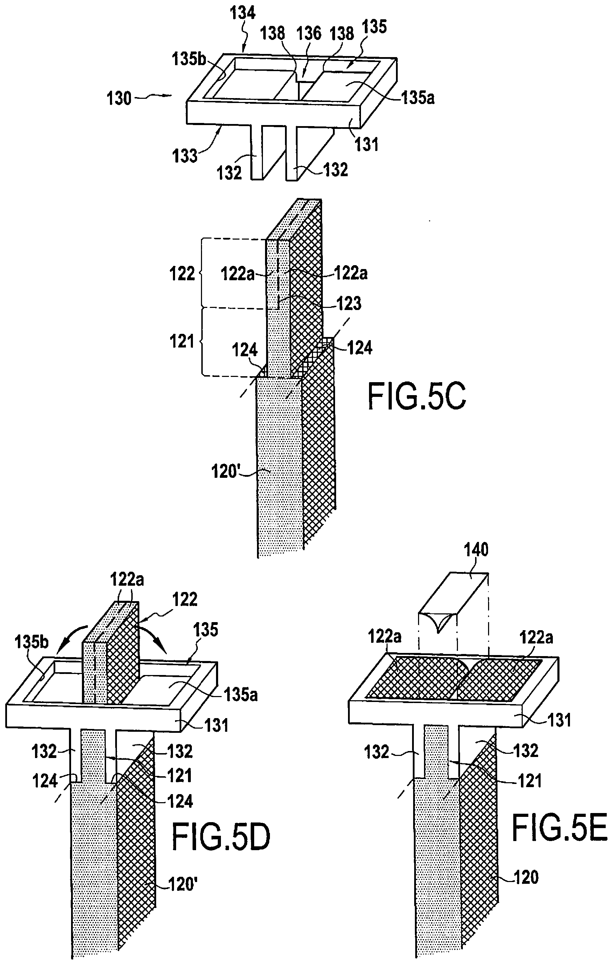

A l'étape suivante illustrée sur la figure 5C, la préforme 120' est toujours maintenue fermement dans l'outillage de maintien 300 (non représenté sur cette figure), et l'on vient approcher l'élément rapporté 130 des première et deuxième 121 et 122 parties de la préforme fibreuse 120'. Durant cette étape, on veillera à orienter l'élément rapporté 130 de façon à ce que les brides 132 s'étendent en direction de l'extrémité de la préforme 120' comprenant les première et deuxième 121 et 122 parties préalablement compactées. On insère ensuite la deuxième partie 122 de la préforme 120' dans l'ouverture 136 de l'élément rapporté 130 jusqu'à ce qu'elle dépasse de l'autre côté de l'élément rapporté 130, que la première partie 121 soit enserrée entre les brides 132, et que les rebords 124 viennent buter contre les brides 132. On notera que la présence de rebords 124 est liée à l'étape de compactage réalisée au préalable, mais que leur présence n'est pas obligatoire pour réaliser l'insertion de la préforme 120' dans l'élément rapporté 130. De même, l'utilisation de l'outillage 200 n'est pas obligatoire. On peut, avant d'insérer la préforme 120' dans l'élément rapporté 130, ajouter un pli de fibres de verre sur les première et deuxième parties 121 et 122 pour éviter leur contact direct avec l'élément rapporté 130.

On procède ensuite, comme illustré sur la figure 5D, au pliage de chaque segment 122a de la deuxième partie 122 de part et d'autre de la première partie 121 afin de les rabattre contre la paroi de fond 135a du logement 135. Il est possible d'ajouter une couche de colle ou de résine sur les faces visibles des segments 122a avant de les plier ou sur la paroi de fond 135a pour augmenter l'adhérence entre l'élément rapporté 130 et la préforme fibreuse 120'. Après cette étape, on obtient le renfort fibreux 120 de l'aube 100 dans lequel les segments 122a sont au contact de la paroi de fond 135a, et l'assemblage entre le renfort fibreux 120 et l'élément rapporté 130 constitue désormais une ébauche d'aube.

Puis, comme illustré sur la figure 5E, on peut positionner l'insert 140 à l'intérieur du logement 135 pour combler l'espace vide au niveau de la jonction entre les segments 122a et renforcer l'assemblage entre l'élément rapporté 130 et le renfort fibreux 120. L'insert 140 peut être collé aux segments 122a.

Enfin, l'ébauche d'aube réalisée précédemment, comprenant éventuellement l'insert 140, peut être placée dans la cavité d'un moule ayant la forme finale de l'aube à fabriquer (non représenté), et une résine peut être injectée dans la cavité du moule afin d'imprégner le renfort fibreux 120 en comblant sa porosité avec de la résine (procédé RTM). On peut éventuellement procéder au séchage du renfort fibreux 120 avant l'injection. Un traitement thermique de cuisson de la résine (pour une résine thermodurcissable) ou de régulation de la température du moule (pour une résine thermoplastique) permet de solidifier la résine et d'achever la densification de l'aube 100. Ainsi, l'élément rapporté 130 et l'insert 140 sont co-injectés avec le renfort fibreux 120, ce qui permet de solidariser ces éléments entre eux encore plus efficacement et d'obtenir une surface aérodynamique pour l'aube 100 qui est continue, On notera que d'autres méthodes connues de l'homme du métier peuvent être mises en œuvre pour densifier l'ébauche d'aube, notamment selon le matériau choisi pour la matrice.

La résine de densification utilisée dans le procédé de moulage par injection pourra être une résine thermodurcissable appartenant à la famille des époxydes, bismaléimides, polyimides, polyesters, vinylesters, cyanate esters, phénoliques, etc. Alternativement, la résine pourra être une résine thermoplastique du type polysulfure de phénylène (PPS), polysulfone (PS), polyéthersulfone (PES), polyamide-imide (PAI), polyétlierimide (PEI), ou bien de la famille des polyaryléthercétones (PAEK) : PEK, PEKK, PEEK, PEKKEK, etc.

On notera que l'étape d'injection peut être réalisée directement dans l'outillage de compactage 200 ou de maintien 300. L'outillage de maintien 300 peut être l'outillage de compactage 200.

Dans une dernière étape, on peut percer des trous de fixation 137 dans l'élément rapporté 130, afin d'obtenir une aube 100 comme celle illustrée sur les figures 4A et 4B.

## Revendications

1. Aube (100) de turbomachine (1) comprenant :
un corps de pale (110) en matériau composite ayant un renfort fibreux (120) présentant un tissage tridimensionnel et densifié par une matrice, le renfort fibreux ayant une direction longitudinale (L) correspondant à la direction longitudinale de l'aube et présentant, dans cette direction longitudinale, une première partie (121) prolongée par une deuxième partie (122) d'extrémité, la deuxième partie comprenant deux segments (122a) déliés l'un de l'autre à partir de la jonction (123) entre la première et la deuxième partie et jusqu'à une extrémité libre du renfort fibreux ; et
un élément rapporté (130) présentant une section en forme de pi (π), l'élément rapporté comportant une partie de plateforme (131) s'étendant perpendiculairement par rapport à la direction longitudinale (L), et deux brides longitudinales (132) séparées l'une de l'autre par un espace, la partie de plateforme comprenant un logement (135) délimité par une paroi de fond (135a) et un rebord (135b), la paroi de fond comprenant une ouverture (136) communiquant avec l'espace entre les deux brides (132),
la première partie (121) du renfort fibreux du corps de pale étant enserrée entre les deux brides (132) de l'élément rapporté (130), les segments (122a) de la deuxième partie (122) du renfort fibreux étant pliés de part et d'autre de la première partie (121) contre la paroi de fond (135a) du logement (135) de l'élément rapporté.

2. Aube selon la revendication 1, comprenant en outre un insert (140) présent entre les segments (122a) de la deuxième partie (122) du renfort fibreux (120) au niveau de la jonction (123) entre lesdits segments.

3. Aube selon l'une quelconque des revendications 1 et 2, comprenant en outre au moins un trou de fixation (137) traversant l'élément rapporté (130) et un segment (122a) de la deuxième partie (122) du renfort fibreux (120).

4. Aube selon l'une quelconque des revendications 1 à 3, comprenant en outre un film de colle entre le renfort fibreux (120) du corps de pale et l'élément rapporté (130).

5. Aube selon l'une quelconque des revendications 1 à 4, dans laquelle le renfort fibreux (120) du corps de pale comprend des fibres de carbone.

6. Aube selon l'une quelconque des revendications 1 à 5, dans laquelle la matrice du corps de pale (110) est une matrice organique ou une matrice céramique.

7. Aube selon l'une quelconque des revendications 1 à 6, dans laquelle l'élément rapporté (130) est en matériau composite ayant un renfort fibreux densifié par une matrice.

8. Aube selon l'une quelconque des revendications 1 à 6, dans laquelle l'élément rapporté (130) est en un matériau métallique.

9. Aube selon la revendication 8, comprenant en outre un pli de fibres de verre entre le renfort fibreux (120) du corps de pale et l'élément rapporté (130).

10. Aube selon l'une quelconque des revendications 1 à 9, dans laquelle l'élément rapporté (130) est présent sur toute la dimension transversale du corps de pale (110).

11. Aube selon l'une quelconque des revendications 1 à 9, comprenant une pluralité d'éléments rapportés (130) sur une même extrémité du corps de pale (110).

12. Aube selon l'une quelconque des revendications 1 à 11, constituant une aube directrice de sortie de turbomachine aéronautique (1).

13. Turbomachine aéronautique (1) comprenant une aube selon l'une quelconque des revendications 1 à 12.

14. Procédé de fabrication d'une aube (100) de turbomachine (1) comprenant : un corps de pale (110) en matériau composite ayant un renfort fibreux (120) densifié par une matrice, le corps de pale s'étendant selon une direction longitudinale (L) correspondant à la direction longitudinale de l'aube ; et un élément rapporté (130) présentant une section en forme de pi (π), l'élément rapporté comportant une partie de plateforme (131) s'étendant perpendiculairement par rapport à la direction longitudinale, et deux brides longitudinales (132) séparées l'une de l'autre par un espace, la partie de plateforme comprenant un logement (135) délimité par une paroi de fond (135a) et un rebord (135b), la paroi de fond comprenant une ouverture (136) communiquant avec l'espace entre les deux brides, le procédé comprenant les étapes suivantes :
la formation par tissage tridimensionnel d'une préforme fibreuse (120') destinée à former le renfort fibreux (120) du corps de pale de l'aube, la préforme ayant une direction longitudinale (L) correspondant à la direction longitudinale de l'aube à fabriquer et présentant, dans cette direction longitudinale, une première partie (121) prolongée par une deuxième partie (122) d'extrémité, la deuxième partie comprenant deux segments (122a) déliés l'un de l'autre à partir de la jonction (123) entre la première et la deuxième partie et jusqu'à une extrémité libre de la préforme,
l'insertion de la préforme fibreuse (120') dans l'ouverture (136) de l'élément rapporté (130) de façon à ce que la première partie de la préforme soit enserrée entre les brides (132) de l'élément rapporté et que les segments (122a) de la deuxième partie dépassent de la paroi de fond (135a) du logement,
le pliage de chaque segment (122a) de la deuxième partie de la préforme fibreuse de part et d'autre de la première partie (121) afin de les rabattre contre la paroi de fond (135a) du logement et obtenir une ébauche d'aube,
le placement de l'ébauche d'aube dans la cavité d'un moule ayant la forme de l'aube à fabriquer,
l'injection d'une résine à l'intérieur de la cavité du moule dans laquelle l'ébauche d'aube est présente de façon à imprégner l'ébauche de résine, et
le traitement thermique de l'ébauche imprégnée de façon à transformer la résine et obtenir l'aube (100).

15. Procédé selon la revendication 14, comprenant en outre, avant l'insertion de la préforme fibreuse (120') dans l'ouverture de l'élément rapporté, une étape de compactage des première (121) et deuxième (122) parties de la préforme fibreuse.

## Patentansprüche

1. Schaufel (100) für Turbomaschinen (1), die umfasst:
einen Schaufelblattkörper (110) aus Verbundwerkstoff, der eine Faserverstärkung (120) aufweist, die ein dreidimensionales und durch eine Matrix verdichtetes Geflecht aufweist, wobei die Faserverstärkung eine Längsrichtung (L) aufweist, die der Längsrichtung der Schaufel entspricht und in dieser Längsrichtung einen ersten Teil (121) aufweist, der durch einen zweiten Endteil (122) verlängert ist, wobei der zweite Teil zwei Segmente (122a) umfasst, die voneinander ab der Verbindung (123) zwischen dem ersten und dem zweiten Teil und bis zu einem freien Ende der Faserverstärkung getrennt sind; und
ein angestücktes Element (130), das einen Pi-förmigen (n) Querschnitt aufweist, wobei das angestückte Element einen Plattformteil (131), der sich senkrecht in Bezug auf die Längsrichtung (L) erstreckt, und zwei Längsbügel (132) umfasst, die durch einen Raum voneinander getrennt sind, wobei der Plattformteil eine Aufnahme (135) umfasst, die durch eine Rückwand (135a) und einen Rand (135b) begrenzt ist, wobei die Rückwand eine Öffnung (136) umfasst, die mit dem Raum zwischen den zwei Bügeln (132) verbunden ist,
wobei der erste Teil (121) der Faserverstärkung des Schaufelblattkörpers zwischen den zwei Bügeln (132) des angestückten Elements (130) eingezwängt ist, wobei die Segmente (122a) des zweiten Teils (122) der Faserverstärkung auf beiden Seiten des ersten Teils (121) gegen die Rückwand (135a) der Aufnahme (135) des angestückten Elements gebogen sind.

2. Schaufel nach Anspruch 1, die ferner einen Einsatz (140) umfasst, der zwischen den Segmenten (122a) des zweiten Teils (122) der Faserverstärkung (120) im Bereich der Verbindung (123) zwischen den Segmenten vorhanden ist.

3. Schaufel nach einem der Ansprüche 1 und 2, die ferner mindestens ein Befestigungsloch (137) umfasst, das das angestückte Element (130) und ein Segment (122a) des zweiten Teils (122) der Faserverstärkung (120) durchquert.

4. Schaufel nach einem der Ansprüche 1 bis 3, die ferner einen Klebstofffilm zwischen der Faserverstärkung (120) des Schaufelblattkörpers und dem angestückten Element (130) umfasst.

5. Schaufel nach einem der Ansprüche 1 bis 4, wobei die Faserverstärkung (120) des Schaufelblattkörpers Kohlenstofffasern umfasst.

6. Schaufel nach einem der Ansprüche 1 bis 5, wobei die Matrix des Schaufelblattkörpers (110) eine organische Matrix oder eine Keramikmatrix ist.

7. Schaufel nach einem der Ansprüche 1 bis 6, wobei das angestückte Element (130) aus Verbundwerkstoff ist, der eine durch eine Matrix verdichtete Faserverstärkung aufweist.

8. Schaufel nach einem der Ansprüche 1 bis 6, wobei das angestückte Element (130) aus einem metallischen Werkstoff ist.

9. Schaufel nach Anspruch 8, die ferner eine Glasfaserlage zwischen der Faserverstärkung (120) des Schaufelblattkörpers und dem angestückten Element (130) umfasst.

10. Schaufel nach einem der Ansprüche 1 bis 9, wobei das angestückte Element (130) auf der gesamten Querabmessung des Schaufelblattkörpers (110) vorhanden ist.

11. Schaufel nach einem der Ansprüche 1 bis 9, die eine Vielzahl von angestückten Elementen (130) auf einem selben Ende des Schaufelblattkörpers (110) umfasst.

12. Schaufel nach einem der Ansprüche 1 bis 11, die eine Austrittsleitschaufel für Luftfahrt-Turbomaschinen (1) ist.

13. Luftfahrt-Turbomaschine (1), die eine Schaufel nach einem der Ansprüche 1 bis 12 umfasst.

14. Verfahren zur Herstellung einer Schaufel (100) für Turbomaschinen (1), die umfasst: einen Schaufelblattkörper (110) aus Verbundwerkstoff, der eine durch eine Matrix verstärkte Faserverstärkung (120) aufweist, wobei der Schaufelblattkörper sich entlang einer Längsrichtung (L) erstreckt, die der Längsrichtung der Schaufel entspricht; und ein angestücktes Element (130), das einen Pi-förmigen (n) Querschnitt aufweist, wobei das angestückte Element einen Plattformteil (131), der sich senkrecht in Bezug auf die Längsrichtung erstreckt, und zwei Längsbügel (132) umfasst, die durch einen Raum voneinander getrennt sind, wobei der Plattformteil eine Aufnahme (135) umfasst, die durch eine Rückwand (135a) und einen Rand (135b) begrenzt ist, wobei die Rückwand eine Öffnung (136) umfasst, die mit dem Raum zwischen den zwei Bügeln verbunden ist, wobei das Verfahren die folgenden Schritte umfasst:
Bildung einer Faservorform (120'), die dazu bestimmt ist, die Faserverstärkung (120) des Schaufelblattkörpers zu bilden, durch dreidimensionales Flechten, wobei die Vorform eine Längsrichtung (L) aufweist, die der Längsrichtung der herzustellenden Schaufel entspricht, und in dieser Längsrichtung einen ersten Teil (121) aufweist, der durch einen zweiten Endteil (122) verlängert ist, wobei der zweite Teil zwei Segmente (122a) umfasst, die ab der Verbindung (123) zwischen dem ersten Teil und dem zweiten Teil und bis zu einem freien Ende der Vorform getrennt sind,
Einsetzen der Faservorform (120') in der Öffnung (136) des angestückten Elements (130), derart, dass der erste Teil der Vorform zwischen den Bügeln (132) des angestückten Elements eingezwängt wird und die Segmente (122a) des zweiten Teils von der Rückwand (135a) der Aufnahme überstehen,
Biegen jedes Segments (122a) des zweiten Teils der Faservorform auf beiden Seiten des ersten Teils (121), derart, dass sie gegen die Rückwand (135a) der Aufnahme umgebogen werden und ein Schaufelrohling erhalten wird,
Platzieren des Schaufelrohlings in dem Hohlraum einer Spritzform, die die Form der herzustellenden Schaufel aufweist,
Einspritzen eines Harzes im Inneren des Hohlraums der Spritzform, in der der Schaufelrohling vorhanden ist, derart, dass der Rohling mit Harz imprägniert wird, und
Wärmebehandlung des imprägnierten Rohlings, derart, dass das Harz umgewandelt wird und die Schaufel (100) erhalten wird.

15. Verfahren nach Anspruch 14, das ferner vor dem Einsetzen der Faservorform (120') in der Öffnung des angestückten Elements einen Schritt zur Verdichtung des ersten (121) und des zweiten Teils (122) der Faservorform umfasst.

## Claims

1. Blade of a turbomachine comprising:
a blade body of composite material having a fiber reinforcement having a three-dimensional weave and densified by a matrix, the fiber reinforcement having a longitudinal direction corresponding to the longitudinal direction of the blade and having, in this longitudinal direction, a first part extended by a second, end, part, the second part comprising two segments separated from each other from the junction between the first and second parts to a free end of the fiber reinforcement; and
an insert having a pi-shaped section, the insert having a platform part extending perpendicularly to the longitudinal direction, and two longitudinal flanges separated from each other by a space, the platform part comprising a housing delimited by a bottom wall and a rim, the bottom wall including an opening communicating with the space between the two flanges,
the first part of the fiber reinforcement of the blade body being clamped between the two flanges of the insert, the segments of the second part of the fiber reinforcement being folded on either side of the first part against the bottom wall of the housing of the insert.

2. Blade according to claim 1, further comprising an insert present between the segments of the second part of the fiber reinforcement at the junction between said segments.

3. Blade according to claim 1, further comprising at least one mounting hole extending through the insert and a segment of the second part of the fiber reinforcement.

4. Blade according to claim 1, further comprising a glue film between the fiber reinforcement of the blade body and the insert.

5. Blade according to claim 1, wherein the fiber reinforcement of the blade body comprises carbon fibers.

6. Blade according to claim 1, wherein the blade body matrix is an organic matrix or a ceramic matrix.

7. Blade according to claim 1, wherein the insert is of composite material having matrix-densified fiber reinforcement.

8. Blade according to claim 1, wherein the insert is of a metallic material.

9. Blade according to claim 8, further comprising a ply of glass fibers between the fiber reinforcement of the blade body and the insert.

10. Blade according to claim 1, wherein the insert is present throughout the transverse dimension of the blade body.

11. Blade according to claim 1, comprising a plurality of inserts on the same end of the blade body.

12. Blade according to claim 1, constituting an aeronautical outlet guide vane of a turbomachine.

13. Aeronautical turbomachine comprising a blade according to claim 1.

14. Method of manufacturing a turbine engine blade comprising:
a blade body of composite material having a fiber reinforcementdensified by a die, the blade body extending in accordance with a longitudinal direction corresponding to the longitudinal direction of the blade; and an insert having a pi-shaped section, the insert having a part of the platform extending perpendicularly to the longitudinal direction, and two longitudinal flanges separated from each other by a space, the platform part comprising a housing delimited by a bottom wall and a rim, the bottom wall comprising an opening communicating with the bottom space between the two flanges, the method comprising the following steps:
the formation by three-dimensional weaving of a fiber preform intended to form the fiber reinforcement of the blade body of the blade, the preform having a longitudinal direction corresponding to the longitudinal direction of the blade to be produced and having, in this longitudinal direction, a first part extended by a second, end, part, the second part comprising two segments separated from each other from the junction between the first and the second part to a free end of the preform,
insertion of the fiber preform in the opening of the insert so that the first part of the preform is sandwiched between the flanges of the insert and that the segments of the second part protrude from the bottom wall of the housing,
folding of each segment of the second part of the fiber preform on either side of the first part to fold against the bottom wall of the housing in order to obtain a blade blank,
placing of the blade blank in the cavity of a mold having the shape of the blade to be produced,
injecting a resin into the cavity of the mold in which the blade blank is present in order to impregnate the blank with resin, and
heat treatment of the impregnated blank in order to transform the resin and obtain the blade.

15. Method according to claim 14, further comprising a step of compacting the first and second parts of the fiber preform prior to insertion of the fiber preform into the opening of the insert.
